# EUROPÄISCHE PATENTSCHRIFT

(11) **EP 3 866 326 B1**
(45) Veröffentlichungstag und Bekanntmachung des Hinweises auf die Patenterteilung: **12.08.2026**
(21) Anmeldenummer: 20157647.7
(22) Anmeldetag: 17.02.2020
(51) Int. Cl.: H02M 7/483, H02M 1/36, H02M 1/00

(54) **UMRICHTER SOWIE VERFAHREN ZU DESSEN BETRIEB**
CONVERTER AND METHOD FOR THE OPERATION OF SAME
ONDULEUR AINSI QUE SON PROCÉDÉ DE FONCTIONNEMENT

(43) Veröffentlichungstag der Anmeldung: 18.08.2021
(73) Patentinhaber: Siemens Energy Global GmbH & Co. KG, 81739 München (DE)
(72) Erfinder: Alvarez Valenzuela, Rodrigo Alonso, 90408 Nürnberg (DE); Kammerer, Felix, 91058 Erlangen (DE)

(56) Entgegenhaltungen:
- CN-A- 102 983 735
- CN-A- 104 821 712
- CN-A- 108 696 165
- US-A1- 2017 271 997
- US-A1- 2018 076 734

## Beschreibung

Die Erfindung bezieht sich auf ein Verfahren zum Ansteuern eines Umrichters sowie auf einen Umrichter, der entsprechend betrieben werden kann.

Die Druckschrift "Modular Multilevel Converter: An universal concept for HVDC-Networks and extended DC-Bus-applications" (R. Marquardt, The 2010 International Power Electronics Conference, Seiten 502 bis 507) offenbart ein Verfahren zum Betreiben eines Umrichters. Der vorbekannte Umrichter weist Reihenschaltungen auf, deren äußere Anschlüsse Gleichspannungsanschlüsse des Umrichters bilden. Die Reihenschaltungen umfassen jeweils zwei in Reihe geschaltete Modulreihenschaltungen, deren elektrische Verbindungsstellen jeweils einen Wechselspannungsanschluss des Umrichters bilden. Die Modulreihenschaltungen weisen jeweils mindestens zwei in Reihe geschaltete Teilmodule mit jeweils mindestens zwei Schaltelementen und einem Kondensator auf. Die Ansteuerung des Umrichters erfolgt durch Ansteuerung der Teilmodule.

Aus der US 2017/271997 A1 ist ein Verfahren zum Balancieren von Schaltmodulspannungen eines modularen Mehrstufenumrichters bekannt, bei dem die Schaltmodule in zwei Untermengen aufgeteilt und entsprechend der Aufteilung in zwei unterschiedlichen Betriebsmodi betrieben werden.

Der Erfindung liegt die Aufgabe zugrunde, einen Umrichter anzugeben, der im Falle, dass kein Energiefluss zwischen den Anschlussseiten des Umrichters gewünscht ist, ein gegenüber herkömmlichen Umrichtern verbessertes Leerlaufverhalten aufweist.

Diese Aufgabe wird erfindungsgemäß durch einen Umrichter mit den Merkmalen gemäß Patentanspruch 1 gelöst. Vorteilhafte Ausgestaltungen des erfindungsgemäßen Umrichters sind in Unteransprüchen angegeben.

Danach ist erfindungsgemäß vorgesehen, dass die Steuereinrichtung derart ausgestaltet ist, dass sie zumindest zwei Leerlaufbetriebsarten ermöglicht, nämlich eine erste Leerlaufbetriebsart, bei der sich zumindest eines der Teilmodule im aktiven Betrieb befindet, und eine zweite Leerlaufbetriebsart, bei der alle Teilmodule inaktiv sind, insbesondere die genannten zwei Schaltelemente aller Teilmodule ausgeschaltet sind, und die Steuereinrichtung außerdem derart ausgestaltet ist, dass sie bei gewünschtem Leerlauf die zweite Leerlaufbetriebsart einstellt, solange der Ladezustand der oder einer vorgegebenen Gruppe an Energiespeichern des Umrichters eine vorgegebene Ladebedingung erfüllt, und andernfalls die erste Leerlaufbetriebsart einstellt.

Ein wesentlicher Vorteil des erfindungsgemäßen Umrichters ist darin zu sehen, dass dieser - im Falle eines Leerlaufs - durch die zwei Leerlaufbetriebsarten einen kleineren Energieverbrauch als bisherige Umrichter ermöglicht. In der zweiten Leerlaufbetriebsart sind nämlich alle Teilmodule inaktiv, insbesondere ihre Schaltelemente ausgeschaltet, und stromlos. Die zweite Leerlaufbetriebsart wird vorzugsweise immer dann aktiviert, wenn der Ladezustand der Energiespeicher dies erlaubt; die wegen eines Stromflusses energetisch weniger attraktive erste Leerlaufbetriebsart lässt sich somit auf Zeitschlitze beschränken, bei denen die erste Leerlaufbetriebsart zum Aufladen der Energiespeicher erforderlich ist. Die erste Leerlaufbetriebsart kann also beispielsweise immer nur dann aktiviert werden, wenn während der zweiten Leerlaufbetriebsart die Energiespeicher über ein vorgegebenes Maß hinaus entladen worden sind und ein Nachladen der Energiespeicher - in der ersten Leerlaufbetriebsart - erfolgen soll.

Erfindungsgemäß ist die Steuereinrichtung derart ausgestaltet, dass sie von der zweiten Leerlaufbetriebsart in die erste Leerlaufbetriebsart schaltet, wenn während der zweiten Leerlaufbetriebsart der Ladezustand oder die Spannung zumindest eines der Energiespeicher der zumindest einen Modulreihenschaltung einen vorgegebenen Mindestladezustand oder eine vorgegebene Modulmindestspannung erreicht oder unterschreitet.

Weist der Umrichter mehrere Modulreihenschaltungen auf, so ist bei einer vorteilhaften Variante vorgesehen, dass die Steuereinrichtung das Umschalten von der zweiten Leerlaufbetriebsart in die erste Leerlaufbetriebsart jeweils modulreihenschaltungsindividuell vornimmt, und zwar wenn bzw. sobald während der zweiten Leerlaufbetriebsart der Ladezustand oder die Spannung zumindest eines der Energiespeicher der jeweils betrachteten Modulreihenschaltung einen vorgegebenen Mindestladezustand oder eine vorgegebene Mindestspannung erreicht oder unterschreitet.

Bei einer anderen, als noch vorteilhafter angesehenen Variante, ist vorgesehen, dass - im Falle, dass der Umrichter mehrere Modulreihenschaltungen aufweist - die Steuereinrichtung das Umschalten von der zweiten Leerlaufbetriebsart in die erste Leerlaufbetriebsart bei allen Modulreihenschaltungen, also umrichterübergreifend bzw. modulreihenschaltungsübergreifend, vornimmt, wenn bzw. sobald während der zweiten Leerlaufbetriebsart bei mindestens einer der Modulreihenschaltungen der Ladezustand oder die Spannung zumindest eines der Energiespeicher einen vorgegebenen Mindestladezustand oder eine vorgegebene Mindestspannung erreicht oder unterschreitet.

Auch wird es als vorteilhaft angesehen, wenn die Steuereinrichtung von der zweiten Leerlaufbetriebsart in die erste Leerlaufbetriebsart schaltet, wenn bzw. sobald während der zweiten Leerlaufbetriebsart die Spannung, an der zumindest einen Modulreihenschaltung eine vorgegebene Mindestspannung erreicht oder unterschreitet. Weist der Umrichter mehrere Modulreihenschaltungen auf, so kann das spannungsabhängige Umschalten - wie bereits erläutert - modulreihenschaltungsindividuell oder umrichterübergreifend erfolgen.

Im Falle eines umrichterübergreifenden Umschaltens werden vorzugsweise alle Modulreihenschaltungen umgeschaltet, sobald zumindest eine der Modulreihenschaltungen die vorgegebene Mindestspannung erreicht oder unterschreitet.

Darüber hinaus ist es vorteilhaft, wenn die Steuereinrichtung von der ersten Leerlaufbetriebsart in die zweite Leerlaufbetriebsart schaltet, sobald die Spannungen an den Energiespeichern der zumindest einen Modulreihenschaltung so groß sind, dass nach einem Umschalten auf die zweite Leerlaufbetriebsart die an der zumindest einen Modulreihenschaltung anliegende Spannung eine vorgegebene Sollspannung erreicht oder überschreitet. Weist der Umrichter mehrere Modulreihenschaltungen auf, so ist es vorteilhaft, wenn die Steuereinrichtung von der ersten Leerlaufbetriebsart in die zweite Leerlaufbetriebsart erst umschaltet, wenn nach einem Umschalten auf die zweite Leerlaufbetriebsart die an allen Modulreihenschaltungen anliegenden Spannungen jeweils die vorgegebene Sollspannung erreichen oder überschreiten.

Vorteilhaft ist es, wenn in der ersten Leerlaufbetriebsart zumindest ein Schaltelement mindestens eines der Teilmodule eingeschaltet ist und der Energiespeicher des zugehörigen Teilmoduls durch Mitwirken des zumindest einen eingeschalteten Schaltelements zugeschaltet oder überbrückt ist und die elektrischen Spannungen der zugeschalteten oder überbrückten Teilmodule die an der zumindest einen Modulreihenschaltung anliegende Modulreihenschaltungsspannung bestimmen und den Leerlauf gewährleisten. Besonders bevorzugt sind in der ersten Leerlaufbetriebsart alle Teilmodule eingeschaltet bzw. aktiv.

Vorteilhaft ist es, wenn in der zweiten Leerlaufbetriebsart aufgrund ausgeschalteter Schaltelemente die Energiespeicher aller Teilmodule weder zugeschaltet noch überbrückt sind und die zumindest eine Modulreihenschaltungsspannung eine Leerlaufspannung aufweist, die durch die Summenspannung aller Teilmodule bestimmt oder zumindest mitbestimmt wird.

Die Steuereinrichtung schaltet - bei der Modulreihenschaltung im Falle einer einzigen Modulreihenschaltung oder im Falle mehrerer Modulreihenschaltungen bei jeder der Modulreihenschaltungen - von der ersten Leerlaufbetriebsart in die zweite Leerlaufbetriebsart und umgekehrt vorzugsweise jeweils - derart, dass die Teilmodule insgesamt oder zumindest bei der jeweiligen Modulreihenschaltung nicht gleichzeitig umgeschaltet werden, sondern zeitlich versetzt bzw. gestaffelt nacheinander, um ein schlagartiges Blockieren oder Deblockieren des Umrichters zu vermeiden.

Mit anderen Worten wird der Umrichter vorzugsweise nicht schlagartig blockiert oder deblockiert bzw. hinsichtlich der Leerlaufbetriebsarten umgeschaltet, um Spannungstransienten zu vermeiden, da diese EMV-Probleme verursachen könnten und die Isolation durch parasitäre kapazitive Ströme belasten würden, was wiederum zu Schäden in der Hardware des Umrichters führen könnte.

Vorzugsweise wird die zeitliche Ableitung der Modulreihenschaltungsspannungen nach der Zeit auf einen vorgegebenen Maximalwert begrenzt, indem - wie beschrieben - vorzugsweise die Teilmodule zeitlich gestaffelt umgeschaltet, also blockiert oder deblockiert, werden.

Auch ist es vorteilhaft, wenn das Umschalten der Leerlaufbetriebsarten, insbesondere von der ersten in die zweite Leerlaufbetriebsart, erst erfolgt, nachdem die Steuereinrichtung durch vorherige Ansteuerung der Teilmodule den Strom durch jede der Modulreihenschaltungen zuvor auf Null oder zumindest annähernd auf Null gestellt hat.

Vorzugsweise ist in der zweiten Leerlaufbetriebsart die zumindest eine Modulreihenschaltung (bzw. jede der Modulreihenschaltungen im Falle mehrerer Modulreihenschaltungen) aufgrund der Höhe der an ihr anliegenden Modulreihenschaltungsspannung stromflussmäßig zwischen der ersten Anschlussseite und der zweiten Anschlussseite isolierend.

Die erste Anschlussseite ist vorzugsweise eine Wechselspannungsseite, die zumindest einen Wechselspannungsanschluss umfasst, an dem ein Wechselstrom eingespeist oder entnommen werden kann.

Die zweite Anschlussseite ist vorzugsweise eine Gleichspannungsseite, die zwei Gleichspannungsanschlüsse umfasst, an denen ein Gleichstrom eingespeist oder entnommen werden kann.

Die zumindest eine Modulreihenschaltung (bzw. jede der Modulreihenschaltungen im Falle mehrerer Modulreihenschaltungen) ist vorzugsweise zwischen einen der zwei Gleichspannungsanschlüsse und den oder einen der Wechselspannungsanschlüsse der ersten Anschlussseite geschaltet.

Die Steuereinrichtung stellt - bei gewünschtem Leerlauf - bei der zumindest einen Modulreihenschaltung die erste Leerlaufbetriebsart vorzugsweise dann ein, wenn die Summenspannung aus den Spannungen der Energiespeicher der Teilmodule eine vorgegebene Mindestspannung erreicht oder unterschreitet.

Weist der Umrichter mehrere Modulreihenschaltungen auf, so ist es vorteilhaft, wenn die Steuereinrichtung - bei gewünschtem Leerlauf - bei allen Modulreihenschaltungen die erste Leerlaufbetriebsart einstellt, wenn die Summenspannung aus den Spannungen der Energiespeicher der Teilmodule zumindest einer der Modulreihenschaltungen eine vorgegebene Mindestspannung erreicht oder unterschreitet.

Alternativ kann das Umstellen der Leerlaufbetriebsart in die erste Leerlaufbetriebsart auch modulreihenschaltungsindividuell erfolgen, also jeweils dann, wenn die Summenspannung aus den Spannungen der Energiespeicher der Teilmodule der jeweiligen Modulreihenschaltung eine vorgegebene Mindestspannung erreicht oder unterschreitet.

Die Steuereinrichtung errechnet die vorgegebene Mindestspannung vorzugsweise unter Heranziehung des jeweiligen Betriebszustands des Umrichters.

Besonders vorteilhaft ist es, wenn die Mindestspannung einer Spannungssumme entspricht oder zumindest von einer Spannungssumme abhängig ist, die durch Summenbildung ermittelt wird, und zwar aus dem halben Betrag der Gleichspannung, die zwischen den zwei Gleichspannungsanschlüssen liegt oder zumindest liegen soll, und dem Betrag der Spannungsamplitude der an dem Wechselspannungsanschluss oder zwischen den Wechselspannungsanschlüssen anliegenden Wechselspannung.

Zwischen die zwei Gleichspannungsanschlüsse ist vorzugsweise zumindest eine Reihenschaltung mit zwei Modulreihenschaltungen geschaltet, deren Mittenanschluss den oder einen der Wechselspannungsanschlüsse bildet.

Besonders vorteilhaft ist es außerdem, wenn der Umrichter zumindest zwei, vorzugsweise drei, parallel geschaltete Reihenschaltungen umfasst, die jeweils zwei Modulreihenschaltungen umfassen und deren äußere Anschlüsse jeweils einen der Gleichspannungsanschlüsse der Umrichteranordnung bilden, und jeder der Mittenanschlüsse zwischen zwei in Reihe liegenden Modulreihenschaltungen einen Wechselspannungsanschluss des Umrichters bildet.

Die Teilmodule oder zumindest eines der Teilmodule ist vorzugsweise ein elektrisches Halbbrückenmodul.

Die Teilmodule oder zumindest eines der Teilmodule ist vorzugsweise ein elektrisches Vollbrückenmodul.

Die Teilmodule weisen als Schaltelemente vorzugsweise Schalttransistoren auf, zu denen jeweils eine Freilaufdiode parallel (bzw. antiparallel) geschaltet ist.

Die Erfindung bezieht sich außerdem auf ein Verfahren zum Betreiben eines Umrichters, der mit einer ersten Anschlussseite und einer zweiten Anschlussseite ausgestattet ist, wobei der Umrichter zumindest eine Modulreihenschaltung mit zwei elektrisch in Reihe geschalteten Teilmodulen und eine Steuereinrichtung zum Ansteuern der Teilmodule aufweist, wobei die Teilmodule jeweils einen Energiespeicher und zumindest zwei Schaltelemente umfassen, von denen im aktiven Betrieb des Teilmoduls zumindest ein Schaltelement eingeschaltet ist, und wobei die Steuereinrichtung durch Ansteuerung der Schaltelemente einen vorgegebenen Energiefluss zwischen den zwei Anschlussseiten einstellt oder durch Ansteuerung der Schaltelemente einen Leerlauf, bei dem kein Energiefluss zwischen den zwei Anschlussseiten vorliegt, hervorruft. Erfindungsgemäß ist vorgesehen, dass die Steuereinrichtung zumindest zwei Leerlaufbetriebsarten ermöglicht, nämlich eine erste Leerlaufbetriebsart, bei der sich zumindest eines der Teilmodule im aktiven Betrieb befindet, und eine zweite Leerlaufbetriebsart, bei der alle Teilmodule inaktiv sind, insbesondere die zumindest zwei Schaltelemente jedes Teilmoduls ausgeschaltet sind, und die Steuereinrichtung bei gewünschtem Leerlauf die zweite Leerlaufbetriebsart einstellt, solange der Ladezustand der oder einer vorgegebenen Gruppe an Energiespeichern des Umrichters eine vorgegebene Ladebedingung erfüllt, und andernfalls die erste Leerlaufbetriebsart einstellt.

Bezüglich der Vorteile des erfindungsgemäßen Verfahrens und bezüglich vorteilhafter Ausgestaltungen des erfindungsgemäßen Verfahrens sei auf die obigen Ausführungen im Zusammenhang mit dem erfindungsgemäßen Umrichter verwiesen.

Vorteilhaft ist es, wenn im laufenden Betrieb während der ersten Leerlaufbetriebsart alle Teilmodule jeweils aktiv betrieben werden, also bei jedem der Teilmodule jeweils zumindest eines der Schaltelemente eingeschaltet wird.

In der ersten Leerlaufbetriebsart steuert die Steuereinrichtung die Teilmodule vorzugsweise derart an, dass Ladeströme durch die Teilmodule fließen und die Energiespeicher der Teilmodule geladen werden.

Ein Abschalten der Teilmodule zum Zwecke des Umschaltens von der ersten Leerlaufbetriebsart in die zweite Leerlaufbetriebsart erfolgt vorzugsweise zeitlich gestaffelt, um große Strom- und/oder Spannungssprünge zu vermeiden.

Ein Abschalten der Teilmodule zum Zwecke des Umschaltens von der ersten Leerlaufbetriebsart in die zweite Leerlaufbetriebsart erfolgt vorzugsweise erst, nachdem der Strom durch die Modulreihenschaltung(en) von der Steuereinrichtung auf Null oder zumindest näherungsweise Null gestellt worden ist, also mit anderen Worten die genannten Ladeströme zum Aufladen der Energiespeicher der Teilmodule zuvor abgestellt worden sind.

Ein Einschalten der Teilmodule zum Zwecke des Umschaltens von der zweiten Leerlaufbetriebsart in die erste Leerlaufbetriebsart erfolgt vorzugsweise zeitlich gestaffelt - vorzugsweise bei jeweils jeder Modulreihenschaltung gestaffelt -, um große Strom- und/oder Spannungssprünge zu vermeiden. Mit anderen Worten werden vorzugsweise nicht alle Teilmodule gleichzeitig eingeschaltet.

Die Erfindung wird nachfolgend anhand von Ausführungsbeispielen näher erläutert; dabei zeigen beispielhaft
- Figur 1: ein Ausführungsbeispiel für einen erfindungsgemäßen Umrichter,
- Figur 2: ein Ausführungsbeispiel für ein Teilmodul, das zur Bildung von Modulreihenschaltungen bei dem Umrichter gemäß Figur 1 eingesetzt werden kann,
- Figur 3: ein weiteres Ausführungsbeispiel für ein Teilmodul, das zur Bildung von Modulreihenschaltungen bei dem Umrichter gemäß Figur 1 eingesetzt werden kann,
- Figur 4: beispielhaft die Arbeitsweise der Steuereinrichtung des Umrichters 10 gemäß Figur 1 anhand eines Flussdiagramms und
- Figur 5: beispielhaft einen Zeitverlauf der Spannung an einer der Modulreihenschaltungen bei dem Umrichter gemäß Figur 1.

In den Figuren werden der Übersicht halber für identische oder vergleichbare Komponenten stets dieselben Bezugszeichen verwendet.

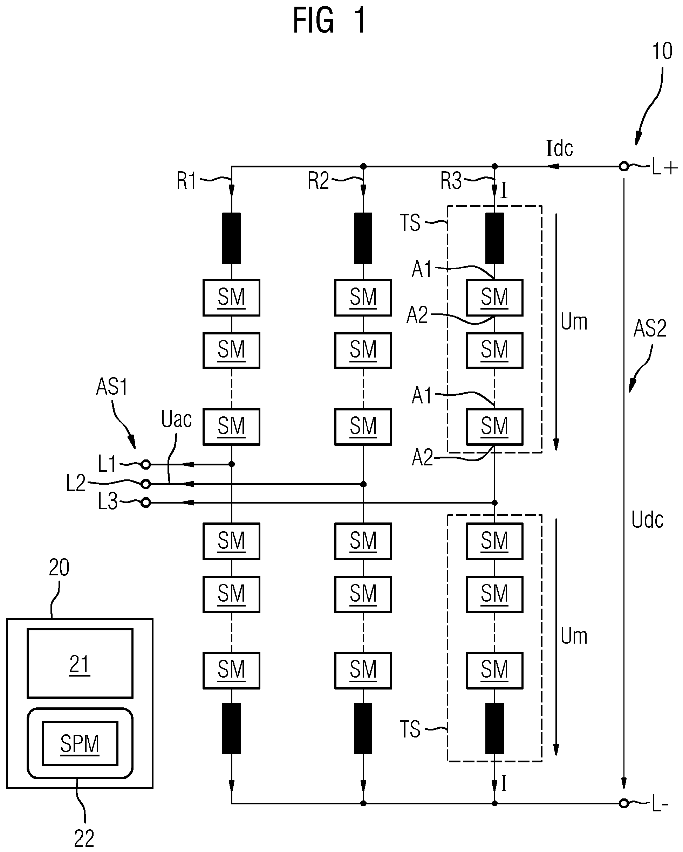

Die Figur 1 zeigt einen Umrichter 10, der auf seiner ersten Anschlussseite AS1 drei Wechselspannungsanschlüsse L1, L2 und L3 aufweist, an denen jeweils ein Wechselstrom in den Umrichter 10 eingespeist oder aus diesem entnommen werden kann. Auf einer zweiten Anschlussseite AS2 befinden sich zwei Gleichspannungsanschlüsse, an denen ein Gleichstrom Idc in den Umrichter 10 eingespeist oder aus dieser entnommen werden kann; diese sind in der Figur 1 mit dem Bezugszeichen L+ und L- gekennzeichnet.

Die Gleichspannung zwischen den Gleichspannungsanschlüssen L+ und L- trägt das Bezugszeichen Udc. Die jeweils zwischen den Wechselspannungsanschlüssen L1, L2 und L3 anliegende Wechselspannung trägt das Bezugszeichen Uac.

Der Umrichter 10 weist drei Reihenschaltungen R1, R2 und R3 auf, deren äußere Anschlüsse die Gleichspannungsanschlüsse L+ und L- des Umrichters 10 bilden. Die Reihenschaltungen R1, R2 und R3 umfassen jeweils zwei in Reihe geschaltete Modulreihenschaltungen TS.

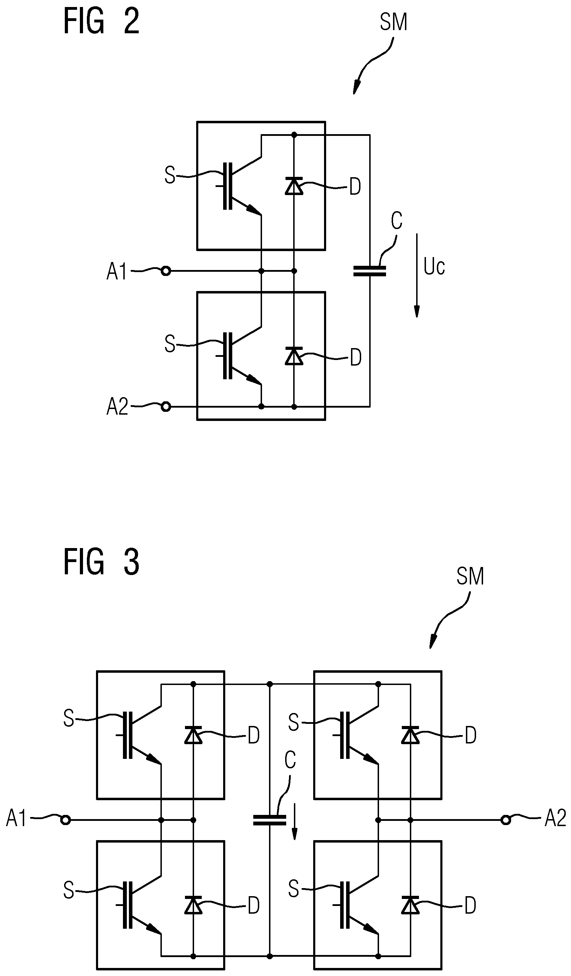

Jede der Modulreihenschaltungen TS weist jeweils mindestens zwei in Reihe geschaltete Teilmodule SM auf, die jeweils mindestens zwei Schaltelemente und einen Kondensator umfassen. Ausführungsbeispiele für geeignete Teilmodule SM werden nachfolgend beispielhaft im Zusammenhang mit den Figuren 2 und 3 erläutert.

Der Umrichter 10 weist eine Steuereinrichtung 20 auf, die zur Ansteuerung der Teilmodule SM und damit zur Ansteuerung der Modulreihenschaltungen TS geeignet ist. Die Steuereinrichtung 20 weist zu diesem Zweck eine Recheneinrichtung 21 sowie einen Speicher 22 auf. In dem Speicher 22 ist ein Steuerprogrammmodul SPM gespeichert, das die Arbeitsweise der Recheneinrichtung 21 bestimmt.

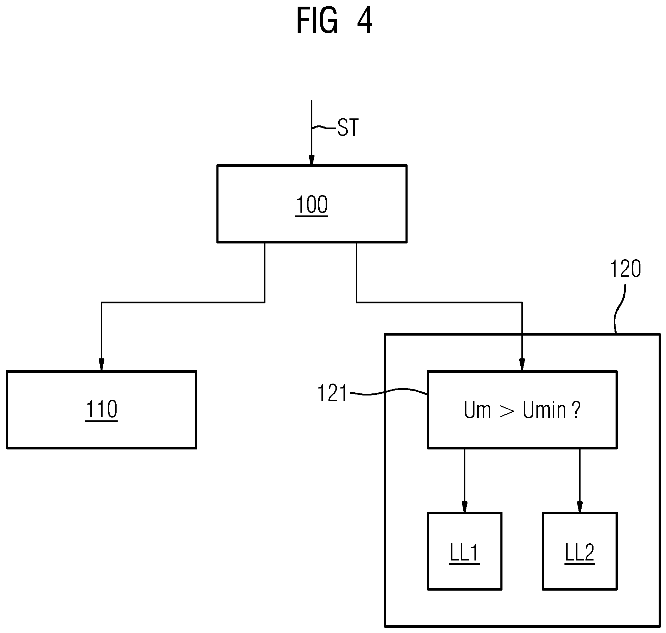

Ein mögliches Betriebsverfahren für den Umrichter 10 wird weiter unten im Zusammenhang mit der Figur 4 näher erläutert.

Die Figur 2 zeigt ein Ausführungsbeispiel für ein Teilmodul SM, das zwei Schaltelemente S in Form von Transistoren, denen jeweils eine Diode D parallel (bzw. antiparallel) geschaltet ist, sowie als Energiespeicher einen Kondensator C umfasst. Die genannten Komponenten bilden eine Halbbrückenschaltung, die durch Ansteuern der Schaltelemente S - seitens der Steuereinrichtung 20 gemäß Figur 1 - einen lediglich bzw. ausschließlich unipolaren Betrieb des Kondensators C ermöglicht. Die Transistoren und die jeweils parallel geschalteten Dioden D können vorgefertigte Bauteile sein, wie in den Figuren zeichnerisch durch Kästen angedeutet ist; die Transistoren und die jeweils parallel geschalteten Dioden D können beispielsweise IGBT-Bauelemente sein.

Im aktiven Betrieb des Teilmoduls SM ist jeweils eines der beiden Schaltelemente S eingeschaltet und das andere Schaltelement S ausgeschaltet. Ist das in der Figur 2 obere Schaltelement S ein- und das untere Schaltelement S ausgeschaltet, so ist der Kondensator C zwischen die zwei Anschlüsse A1 und A2 geschaltet und elektrisch aktiv; ist das in der Figur 2 obere Schaltelement aus- und das untere Schaltelement eingeschaltet, so ist der Kondensator C überbrückt und durch die Dioden von den zwei Anschlüssen A1 und A2 getrennt.

Im passiven Betrieb des Teilmoduls SM sind beide Schaltelemente S ausgeschaltet.

Die Figur 3 zeigt ein Ausführungsbeispiel für ein Teilmodul SM, das vier Schaltelemente S in Form von Transistoren, denen jeweils eine Diode parallelgeschaltet ist, sowie als Energiespeicher einen Kondensator C umfasst. Die genannten Komponenten bilden eine Vollbrückenschaltung, die durch Ansteuern der Schaltelemente S - seitens der Steuereinrichtung 20 gemäß Figur 1 - einen bipolaren Betrieb des Kondensators C ermöglicht.

Im aktiven Betrieb des Teilmoduls SM gemäß Figur 3 sind jeweils zwei der vier Schaltelemente S eingeschaltet und die beiden anderen ausgeschaltet. Im passiven Betrieb des Teilmoduls SM gemäß Figur 3 sind alle vier Schaltelemente S ausgeschaltet.

Die Figur 4 veranschaulicht anhand eines Flussdiagramms eine bevorzugte Arbeitsweise des Steuerprogrammmoduls SPM der Steuereinrichtung 20 gemäß Figur 1.

In einem Betriebsmoduseinstellschritt 100 wird anhand eines eingangsseitigen Steuersignals ST festgelegt, ob der Umrichter 10 in einer Normalbetriebsart 110, bei der ein gewünschter Energiefluss zwischen der ersten Anschlussseite AS1 und der zweiten Anschlussseite AS2 eingestellt wird, oder in einem Leerlauf 120, bei dem ein Energiefluss zwischen der ersten Anschlussseite AS1 und der zweiten Anschlussseite AS2 blockiert wird, betrieben werden soll.

Legt das eingangsseitige Steuersignal ST fest, dass der Umrichter 10 in der Normalbetriebsart 110 betrieben werden soll, so erfolgt die Ansteuerung der Teilmodule TS, wie dies allgemein bekannt ist und beispielsweise in der eingangs genannten Literaturstelle beschrieben ist.

Legt das eingangsseitige Steuersignal ST fest, dass der Umrichter 10 im Leerlauf 120 betrieben werden soll, so wird in einem Prüfschritt 121 geprüft, ob die an den Modulreihenschaltungen TS anliegende Spannung Um eine Mindestspannung Umin erreicht oder überschreitet.

Die Mindestspannung entspricht vorzugsweise einer Spannungssumme, die durch Summenbildung ermittelt wird gemäß $Umin = Udc / 2 + Uac , max$ wobei Uac,max den Betrag der Spannungsamplitude der zwischen den Wechselspannungsanschlüssen L1, L2, L3 anliegenden Wechselspannung Uac bezeichnet.

Ist die Bedingung nicht erfüllt, also Um ≤ Umin, so sind die Energiespeicher der Teilmodule SM bzw. die Kondensatoren C gemäß den Figuren 2 und 3 nicht ausreichend geladen und es wird in die erste Leerlaufbetriebsart LL1 geschaltet, um die Energiespeicher der Teilmodule SM bzw. die Kondensatoren C gemäß den Figuren 2 und 3 soweit aufzuladen, bis die Bedingung Um ≥ Usoll erfüllt wird; Usoll bezeichnet eine vorgegebene Sollspannung, die vorzugsweise zwischen 5% und 20% größer ist als die Mindestspannung Umin.

Ist nach einer gewissen Ladezeit die Bedingung Um ≥ Usoll erfüllt, so sind die Energiespeicher der Teilmodule SM bzw. die Kondensatoren C gemäß den Figuren 2 und 3 ausreichend geladen und es kann in die zweite Leerlaufbetriebsart LL2 geschaltet werden, bei der die Schalter S der Teilmodule SM abgeschaltet sind.

In der zweiten Leerlaufbetriebsart LL2 werden sich die Energiespeicher der Teilmodule SM bzw. die Kondensatoren C gemäß den Figuren 2 und 3 - trotz der ausgeschalteten Schaltelemente S - wieder entladen, sodass nach einer gewissen Zeit die an den Modulreihenschaltungen TS anliegende Spannung Um die Mindestspannung Umin wieder erreichen und unterschreiten wird.

Vorteilhaft ist es, wenn ein Ein- und Abschalten der Teilmodule zum Zwecke des Umschaltens von der ersten Leerlaufbetriebsart in die zweite Leerlaufbetriebsart oder umgekehrt bei jeder der Modulreihenschaltungen TS jeweils zeitlich gestaffelt durchgeführt wird.

Ein Abschalten der Teilmodule SM zum Zwecke des Umschaltens von der ersten Leerlaufbetriebsart LL1 in die zweite Leerlaufbetriebsart LL2 erfolgt vorzugsweise erst, nachdem der Strom I durch die Modulreihenschaltungen TS jeweils auf Null oder zumindest näherungsweise Null gestellt worden ist, also der genannte Ladestrom zum Aufladen der Energiespeicher bzw. Kondensatoren C der Teilmodule TS wieder abgestellt worden ist.

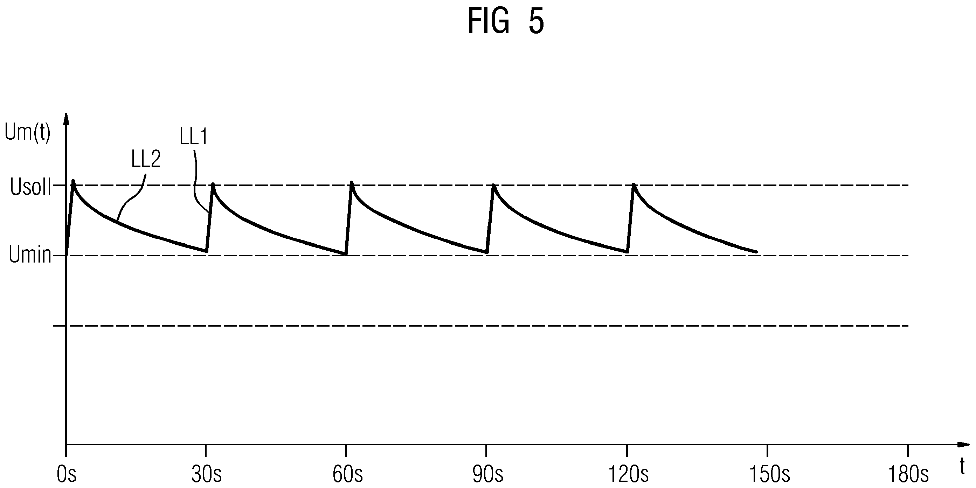

Die Figur 5 zeigt beispielhaft das Umschalten zwischen den Leerlaufbetriebsarten LL1 und LL2 anhand des Spannungsverlaufs der an einer der Modulreihenschaltungen TS anliegenden Spannung Um über der Zeit t.

Es lässt sich in der Figur 5 das Konzept einer Start-Stop-Automatik erkennen. In der zweiten Leerlaufbetriebsart LL2 bleibt der Umrichter 10 einen Großteil der Zeit blockiert, um verlustminimal zu stehen. Anschließend wird er in Abhängigkeit des eigenen Ladezustands und der dynamischen Anforderungen kurzzeitig wieder eingeschaltet (erste Leerlaufbetriebsart LL1), um nachzuladen und/oder eine symmetrische Energieverteilung innerhalb des Umrichters 10 wiederherzustellen.

Die Figur 5 zeigt eine beispielhafte Implementierungsmöglichkeit, bei der der Umrichter 10 alle 30 Sekunden für 0,5 Sekunden wieder aktiv bzw. in die erste Leerlaufbetriebsart LL1 geschaltet wird und mit einem verhältnismäßig kleinen Strom wieder nachgeladen wird. Die Wahl der unteren Spannungsgrenze Umin wird vorzugsweise durch die Dynamikanforderungen und die äußeren Klemmenspannungen definiert.

In einer bevorzugten Implementierung wird der Umrichter 10 nicht schlagartig blockiert oder deblockiert, um Spannungstransienten zu vermeiden. Diese würden EMV-Probleme verursachen können und die Isolation durch parasitäre kapazitive Ströme belasten, was zu Schäden in der Hardware führen könnte. Vorzugsweise wird das dUm/dt zum Blockieren und Deblockieren der Teilmodule SM so vorgegeben, dass durch zeitlich gestaffeltes Blockieren/Deblockieren der einzelnen Teilmodule SM die genannten Probleme minimiert werden.

Auch ist es vorteilhaft, wenn das Umschalten pro Umrichterzweig jeweils stromlos passiert, sodass keine oder nur kleine Spannungssprünge entstehen. Nachdem alle Umrichterzweige aktiv sind, wird der Nachladestrom vorgegeben. Das Blockieren erfolgt in umgekehrter Reihenfolge.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Umrichter (10) mit einer ersten Anschlussseite (AS1) und einer zweiten Anschlussseite (AS2),
- wobei der Umrichter (10) zumindest eine Modulreihenschaltung (TS) mit zwei elektrisch in Reihe geschalteten Teilmodulen (SM) und eine Steuereinrichtung (20) zum Ansteuern der Teilmodule (SM) aufweist,
- wobei die Teilmodule (SM) jeweils einen Energiespeicher und zumindest zwei Schaltelemente (S) umfassen, von denen im aktiven Betrieb des Teilmoduls (SM) zumindest ein Schaltelement (S) eingeschaltet ist, und
- wobei die Steuereinrichtung (20) geeignet ist, durch Ansteuerung der Schaltelemente (S) einen vorgegebenen Energiefluss zwischen den zwei Anschlussseiten (AS1, AS2) zu gewährleisten oder durch Ansteuerung der Schaltelemente (S) einen Leerlauf, bei dem kein Energiefluss zwischen den zwei Anschlussseiten (AS1, AS2) vorliegt, zu ermöglichen, wobei
- die Steuereinrichtung (20) derart ausgestaltet ist, dass sie zumindest zwei Leerlaufbetriebsarten (LL1, LL2) ermöglicht, nämlich
- eine erste Leerlaufbetriebsart (LL1), bei der sich zumindest eines der Teilmodule (SM) im aktiven Betrieb befindet, und
- eine zweite Leerlaufbetriebsart (LL2), bei der alle Teilmodule (SM) inaktiv sind, und
- die Steuereinrichtung (20) außerdem derart ausgestaltet ist, dass sie bei gewünschtem Leerlauf die zweite Leerlaufbetriebsart (LL2) einstellt, solange der Ladezustand der oder einer vorgegebenen Gruppe an Energiespeichern des Umrichters (10) eine vorgegebene Ladebedingung erfüllt, und andernfalls die erste Leerlaufbetriebsart (LL1) einstellt, **dadurch gekennzeichnet, dass** die Steuereinrichtung (20) derart ausgestaltet ist, dass sie von der zweiten Leerlaufbetriebsart (LL2) in die erste Leerlaufbetriebsart (LL1) schaltet, wenn während der zweiten Leerlaufbetriebsart (LL2) der Ladezustand oder die Spannung (Uc) zumindest eines der Energiespeicher der zumindest einen Modulreihenschaltung (TS) einen vorgegebenen Mindestladezustand oder eine vorgegebene Modulmindestspannung erreicht oder unterschreitet.

2. Umrichter (10) nach einem der voranstehenden Ansprüche,
**dadurch gekennzeichnet, dass**
die Steuereinrichtung (20) derart ausgestaltet ist, dass sie von der zweiten Leerlaufbetriebsart (LL2) in die erste Leerlaufbetriebsart (LL1) schaltet, wenn während der zweiten Leerlaufbetriebsart (LL2) die Spannung (Um) an der zumindest einen Modulreihenschaltung (TS) eine vorgegebene Mindestspannung (Umin) erreicht oder unterschreitet.

3. Umrichter (10) nach einem der voranstehenden Ansprüche,
**dadurch gekennzeichnet, dass**
die Steuereinrichtung (20) derart ausgestaltet ist, dass sie von der ersten Leerlaufbetriebsart (LL1) in die zweite Leerlaufbetriebsart (LL2) schaltet, sobald die Spannungen (Uc) an den Energiespeichern so groß sind, dass nach einem Umschalten auf die zweite Leerlaufbetriebsart (LL2) die an der zumindest einen Modulreihenschaltung (TS) anliegende Spannung (Um) eine vorgegebene Sollspannung (Usoll), die größer als die Mindestspannung (Umin) ist, erreicht oder überschreitet.

4. Umrichter (10) nach einem der voranstehenden Ansprüche,
**dadurch gekennzeichnet, dass**
- in der ersten Leerlaufbetriebsart (LL1) zumindest ein Schaltelement (S) mindestens eines der Teilmodule (SM) eingeschaltet ist und der Energiespeicher des zugehörigen Teilmoduls (SM) durch Mitwirken des zumindest einen eingeschalteten Schaltelements (S) zugeschaltet oder überbrückt ist und die elektrischen Spannungen der zugeschalteten oder überbrückten Teilmodule (SM) die an der zumindest einen Modulreihenschaltung (TS) anliegende Modulreihenschaltungsspannung (Um) bestimmen und den Leerlauf gewährleisten, und
- in der zweiten Leerlaufbetriebsart (LL2) aufgrund der ausgeschalteten Schaltelemente (S) die zumindest eine Modulreihenschaltung (TS) eine Leerlaufspannung erzeugt, die durch die Summenspannung der Energiespeicher aller Teilmodule (SM) bestimmt oder zumindest mitbestimmt wird.

5. Umrichter (10) nach einem der voranstehenden Ansprüche,
**dadurch gekennzeichnet, dass**
in der zweiten Leerlaufbetriebsart (LL2) die zumindest eine Modulreihenschaltung (TS) - aufgrund der Höhe der an ihr anliegenden Modulreihenschaltungsspannung und der Sperrwirkung von Dioden innerhalb ihrer Teilmodule (SM) - stromflussmäßig zwischen der ersten Anschlussseite (AS1) und der zweiten Anschlussseite (AS2) isolierend ist.

6. Umrichter (10) nach Anspruch 5,
**dadurch gekennzeichnet, dass**
die erste Anschlussseite (AS1) eine Wechselspannungsseite ist, die zumindest einen Wechselspannungsanschluss (L1, L2, L3) umfasst, an dem ein Wechselstrom eingespeist oder entnommen werden kann.

7. Umrichter (10) nach einem der voranstehenden Ansprüche,
**dadurch gekennzeichnet, dass**
die zweite Anschlussseite (AS2) eine Gleichspannungsseite ist, die zwei Gleichspannungsanschlüsse (L+, L-) umfasst, an denen ein Gleichstrom (Idc) eingespeist oder entnommen werden kann.

8. Umrichter (10) nach einem der voranstehenden Ansprüche,
**dadurch gekennzeichnet, dass**
- die zumindest eine Modulreihenschaltung (TS) zwischen einen der zwei Gleichspannungsanschlüsse und den oder einen der Wechselspannungsanschlüsse geschaltet ist und
- die Steuereinrichtung (20) - bei gewünschtem Leerlauf - bei der zumindest einen Modulreihenschaltung (TS) die erste Leerlaufbetriebsart (LL1) einstellt, wenn die Summenspannung aus den Spannungen der Teilmodule (SM) der zumindest einen Modulreihenschaltung (TS) eine vorgegebene Mindestspannung (Umin) erreicht oder unterschreitet.

9. Umrichter (10) nach Anspruch 8,
**dadurch gekennzeichnet, dass**
die Steuereinrichtung (20) derart ausgestaltet ist, dass sie die vorgegebene Mindestspannung (Umin) unter Heranziehung des jeweiligen Betriebszustands des Umrichters (10) errechnet.

10. Umrichter (10) nach einem der voranstehenden Ansprüche,
**dadurch gekennzeichnet, dass**
die Mindestspannung (Umin) einer Spannungssumme entspricht oder zumindest von einer Spannungssumme abhängig ist, die durch Summenbildung ermittelt wird, und zwar
- aus dem halben Betrag der Gleichspannung (Udc), die zwischen den zwei Gleichspannungsanschlüssen (L+, L-) liegt oder zumindest liegen soll, und
- dem Betrag der Spannungsamplitude der an dem Wechselspannungsanschluss anliegenden Wechselspannung (Uac).

11. Umrichter (10) nach einem der voranstehenden Ansprüche,
**dadurch gekennzeichnet, dass**
zwischen die zwei Gleichspannungsanschlüsse zumindest eine Reihenschaltung mit zwei Modulreihenschaltungen (TS) geschaltet ist, deren Mittenanschluss den oder einen der Wechselspannungsanschlüsse bildet.

12. Umrichter (10) nach einem der voranstehenden Ansprüche,
**dadurch gekennzeichnet, dass**
- der Umrichter (10) zumindest zwei parallel geschaltete Reihenschaltungen (R1, R2, R3) umfasst, die jeweils zwei Modulreihenschaltungen (TS) umfassen und deren äußere Anschlüsse jeweils einen der Gleichspannungsanschlüsse des Umrichters (10) bilden, und
- jeder der Mittenanschlüsse zwischen zwei in Reihe liegenden Modulreihenschaltungen (TS) einen Wechselspannungsanschluss des Umrichters (10) bildet.

13. Verfahren zum Betreiben eines Umrichters (10), der mit einer ersten Anschlussseite (AS1) und einer zweiten Anschlussseite (AS2) ausgestattet ist,
- wobei der Umrichter (10) zumindest eine Modulreihenschaltung (TS) mit zwei elektrisch in Reihe geschalteten Teilmodulen (SM) und eine Steuereinrichtung (20) zum Ansteuern der Teilmodule (SM) aufweist,
- wobei die Teilmodule (SM) jeweils einen Energiespeicher und zumindest zwei Schaltelemente (S) umfassen, von denen im aktiven Betrieb des Teilmoduls (SM) zumindest ein Schaltelement (S) eingeschaltet ist, und
- wobei die Steuereinrichtung (20) durch Ansteuerung der Schaltelemente (S) einen vorgegebenen Energiefluss zwischen den zwei Anschlussseiten (AS1, AS2) einstellt oder durch Ansteuerung der Schaltelemente (S) einen Leerlauf, bei dem kein Energiefluss zwischen den zwei Anschlussseiten (AS1, AS2) vorliegt, hervorruft,
wobei
- die Steuereinrichtung (20) zumindest zwei Leerlaufbetriebsarten (LL1, LL2) ermöglicht, nämlich
- eine erste Leerlaufbetriebsart (LL1), bei der sich zumindest eines der Teilmodule (SM) im aktiven Betrieb befindet, und
- eine zweite Leerlaufbetriebsart (LL2), bei der alle Teilmodule (SM) inaktiv sind, und
- die Steuereinrichtung (20) bei gewünschtem Leerlauf die zweite Leerlaufbetriebsart (LL2) einstellt, solange der Ladezustand der oder einer vorgegebenen Gruppe an Energiespeichern des Umrichters (10) eine vorgegebene Ladebedingung erfüllt, und andernfalls die erste Leerlaufbetriebsart (LL1) einstellt, **dadurch gekennzeichnet dass** die Steuereinrichtung (20) von der zweiten Leerlaufbetriebsart (LL2) in die erste Leerlaufbetriebsart (LL1) schaltet, wenn während der zweiten Leerlaufbetriebsart (LL2) der Ladezustand oder die Spannung (Uc) zumindest eines der Energiespeicher der zumindest einen Modulreihenschaltung (TS) einen vorgegebenen Mindestladezustand oder eine vorgegebene Modulmindestspannung erreicht oder unterschreitet.

14. Verfahren nach Anspruch 13,
**dadurch gekennzeichnet, dass**
- während der ersten Leerlaufbetriebsart (LL1) im laufenden Betrieb alle Teilmodule (SM) im aktiven Betrieb, insbesondere jeweils mit zumindest einem eingeschalteten Schaltelement (S), betrieben werden und/oder
- in der ersten Leerlaufbetriebsart (LL1) die Teilmodule (SM) derart angesteuert werden, dass Ladeströme durch die Teilmodule (SM) fließen und die Energiespeicher der Teilmodule (SM) geladen werden, und/oder
- ein Abschalten der Teilmodule (SM) zum Zwecke des Umschaltens von der ersten Leerlaufbetriebsart (LL1) in die zweite Leerlaufbetriebsart (LL2) zeitlich gestaffelt durchgeführt wird, und/oder
- ein Abschalten der Teilmodule (SM) zum Zwecke des Umschaltens von der ersten Leerlaufbetriebsart (LL1) in die zweite Leerlaufbetriebsart (LL2) vorzugsweise erst erfolgt, nachdem der Strom (I) durch die zumindest eine Modulreihenschaltung (TS) auf Null oder zumindest näherungsweise Null gestellt worden ist, also insbesondere die genannten Ladeströme zum Aufladen der Energiespeicher der Teilmodule (SM) abgestellt worden sind, und/oder
- ein Einschalten der Teilmodule (SM) zum Zwecke des Umschaltens von der zweiten Leerlaufbetriebsart (LL2) in die erste Leerlaufbetriebsart (LL1) zeitlich gestaffelt erfolgt.

## Claims

1. A converter (10) with a first terminal side (AS1) and a second terminal side (AS2),
- wherein the converter (10) has at least one module series connection (TS) with two submodules (SM) electrically connected in series and a control device (20) for driving the submodules (SM),
- wherein the submodules (SM) each comprise an energy store and at least two switching elements (S), of which at least one switching element (S) is switched on during active operation of the submodule (SM), and
- wherein the control device (20) is suitable to ensure a specified energy flow between the two terminal sides (AS1, AS2) by driving the switching elements (S) or to enable an open circuit, during which no energy flow is present between the two terminal sides (AS1, AS2), by driving the switching elements (S),
wherein
- the control device (20) is designed such that it enables at least two open-circuit operating types (LL1, LL2), namely
- a first open-circuit operating type (LL1) in which at least one of the submodules (SM) is in active operation, and
- a second open-circuit operating type (LL2) in which all submodules (SM) are inactive, and
- the control device (20) is furthermore designed such that, upon an open circuit being desired, it sets the second open-circuit operating type (LL2), as long as the state of charge of the or a specified group of energy stores of the converter (10) satisfies a specified charging condition, and otherwise sets the first open-circuit operating type (LL1), **characterised in that** the control device (20) is designed such that it switches from the second open-circuit operating type (LL2) to the first open-circuit operating type (LL1) when, during the second open-circuit operating type (LL2), the state of charge or the voltage (Uc) of at least one of the energy stores of the at least one module series connection (TS) reaches or falls below a specified minimum state of charge or a specified module minimum voltage.

2. The converter (10) according to any one of the preceding claims, **characterised in that**
the control device (20) is designed such that it switches from the second open-circuit operating type (LL2) to the first open-circuit operating type (LL1) when, during the second open-circuit operating type (LL2), the voltage (Um) at the at least one module series connection (TS) reaches or falls below a specified minimum voltage (Umin).

3. The converter (10) according to any one of the preceding claims, **characterised in that**
the control device (20) is designed such that it switches from the first open-circuit operating type (LL1) to the second open-circuit operating type (LL2) as soon as the voltages (Uc) at the energy stores are so high that, after changing over to the second open-circuit operating type (LL2), the voltage (Um) applied to the at least one module series connection (TS) reaches or exceeds a specified target voltage (Usoll) which is greater than the minimum voltage (Umin).

4. The converter (10) according to any one of the preceding claims, **characterised in that**
- in the first open-circuit operating type (LL1), at least one switching element (S) of at least one of the submodules (SM) is switched on and the energy store of the associated submodule (SM) is added or bridged by participation of the at least one switched-on switching element (S) and the electrical voltages of the added or bridged submodules (SM) determine the module series connection voltage (Um) applied to the at least one module series connection (TS) and ensure the open circuit, and
- in the second open-circuit operating type (LL2), due to the switching elements (S) being switched off, the at least one module series connection (TS) generates an open-circuit voltage which is determined or at least co-determined by the sum voltage of the energy stores of all submodules (SM).

5. The converter (10) according to any one of the preceding claims,
**characterised in that**
in the second open-circuit operating type (LL2), the at least one module series connection (TS) - due to the level of the module series connection voltage applied to it and the blocking effect of diodes within its submodules (SM) - is insulating in terms of current flow between the first terminal side (AS1) and the second terminal side (AS2).

6. The converter (10) according to claim 5,
**characterised in that**
the first terminal side (AS1) is an alternating-voltage side comprising at least one alternating-voltage terminal (L1, L2, L3) at which an alternating current can be supplied or drawn.

7. The converter (10) according to any one of the preceding claims,
**characterised in that**
the second terminal side (AS2) is a direct-voltage side comprising two direct-voltage terminals (L+, L-) at which a direct current (Idc) can be supplied or drawn.

8. The converter (10) according to any one of the preceding claims,
**characterised in that**
- the at least one module series connection (TS) is connected between one of the two direct-voltage terminals and the or one of the alternating-voltage terminals, and
- the control device (20) - upon an open circuit being desired
- sets the first open-circuit operating type (LL1) in the at least one module series connection (TS) if the sum voltage of the voltages of the submodules (SM) of the at least one module series connection (TS) reaches or falls below a specified minimum voltage (Umin).

9. The converter (10) according to claim 8,
**characterised in that**
the control device (20) is designed such that it calculates the specified minimum voltage (Umin) utilising the respective operating state of the converter (10).

10. The converter (10) according to any one of the preceding claims,
**characterised in that**
the minimum voltage (Umin) corresponds to a voltage sum or is at least dependent on a voltage sum which is identified by summing, more precisely
- of half the amount of the direct voltage (Udc) which is applied or is at least intended to be applied between the two direct-voltage terminals (L+, L-), and
- the amount of the voltage amplitude of the alternating voltage (Uac) applied to the alternating-voltage terminal.

11. The converter (10) according to any one of the preceding claims,
**characterised in that**
at least one series connection having two module series connections (TS) is connected between the two direct-voltage terminals, the centre terminal of which forms the or one of the alternating-voltage terminals.

12. The converter (10) according to any one of the preceding claims, **characterised in that**
- the converter (10) comprises at least two series connections (R1, R2, R3) connected in parallel, each of which comprises two module series connections (TS) and whose outer terminals each form one of the direct-voltage terminals of the converter (10), and
- each of the centre terminals between two module series connections (TS) located in series forms an alternating-voltage terminal of the converter (10).

13. A method for operating a converter (10) equipped with a first terminal side (AS1) and a second terminal side (AS2),
- wherein the converter (10) has at least one module series connection (TS) with two submodules (SM) electrically connected in series and a control device (20) for driving the submodules (SM),
- wherein the submodules (SM) each comprise an energy store and at least two switching elements (S), of which at least one switching element (S) is switched on during active operation of the submodule (SM), and
- wherein the control device (20) sets a specified energy flow between the two terminal sides (AS1, AS2) by driving the switching elements (S) or elicits an open circuit, during which no energy flow is present between the two terminal sides (AS1, AS2), by driving the switching elements (S),
wherein
- the control device (20) enables at least two open-circuit operating types (LL1, LL2), namely
- a first open-circuit operating type (LL1) in which at least one of the submodules (SM) is in active operation, and
- a second open-circuit operating type (LL2) in which all submodules (SM) are inactive, and
- the control device (20), upon an open circuit being desired, sets the second open-circuit operating type (LL2), as long as the state of charge of the or a specified group of energy stores of the converter (10) satisfies a specified charging condition, and otherwise sets the first open-circuit operating type (LL1),
**characterised in that**
the control device (20) switches from
the second open-circuit operating type (LL2) to the first open-circuit operating type (LL1) when, during the second open-circuit operating type (LL2), the state of charge or the voltage (Uc) of at least one of the energy stores of the at least one module series connection (TS) reaches or falls below a specified minimum state of charge or a specified module minimum voltage.

14. The method according to claim 13,
**characterised in that**
- during the first open-circuit operating type (LL1), during ongoing operation, all submodules (SM) are operated in active operation, in particular each with at least one switching element (S) switched on, and/or
- in the first open-circuit operating type (LL1), the submodules (SM) are driven such that charging currents flow through the submodules (SM) and the energy stores of the submodules (SM) are charged, and/or
- switching off the submodules (SM) for the purpose of changing over from the first open-circuit operating type (LL1) to the second open-circuit operating type (LL2) is performed in a timestaggered manner, and/or
- switching off the submodules (SM) for the purpose of changing over from the first open-circuit operating type (LL1) to the second open-circuit operating type (LL2) preferably only occurs after the current (I) through the at least one module series connection (TS) has been set to zero or at least approximately zero, that is, in particular, the charging currents mentioned for charging the energy stores of the submodules (SM) have been turned off, and/or
- switching on the submodules (SM) for the purpose of changing over from the second open-circuit operating type (LL2) to the first open-circuit operating type (LL1) occurs in a timestaggered manner.

## Revendications

1. Onduleur (10) comprenant un premier côté de raccordement (AS1) et un deuxième côté de raccordement (AS2),
- dans lequel l'onduleur (10) comporte au moins un circuit modulaire en série (TS) doté de deux sous-modules (SM) montés électriquement en série et un dispositif de commande (20) pour la commande des sous-modules (SM),
- dans lequel les sous-modules (SM) comprennent chacun un accumulateur d'énergie et au moins deux éléments de commutation (S), dont au moins un élément de commutation (S) est activé pendant le fonctionnement actif du sous-module (SM), et
- dans lequel le dispositif de commande (20) est apte à assurer, par commande des éléments de commutation (S), un flux d'énergie prédéfini entre les deux côtés de raccordement (AS1, AS2) ou à permettre, par commande des éléments de commutation (S), une marche à vide dans laquelle il n'y a pas de flux d'énergie entre les deux côtés de raccordement (AS1, AS2),
dans lequel
- le dispositif de commande (20) est configuré de manière à permettre au moins deux modes de marche à vide (LL1, LL2), à savoir
- un premier mode de marche à vide (LL1), dans lequel au moins l'un des sous-modules (SM) se trouve en fonctionnement actif, et
- un deuxième mode de marche à vide (LL2), dans lequel tous les sous-modules (SM) sont inactifs, et
- le dispositif de commande (20) est en outre configuré de telle sorte qu'en cas de marche à vide souhaitée, il établit le deuxième mode de marche à vide (LL2) tant que l'état de charge du ou d'un groupe prédéfini d'accumulateurs d'énergie de l'onduleur (10) remplit une condition de charge prédéfinie, et établit sinon le premier mode de marche à vide (LL1), **caractérisé en ce que**
le dispositif de commande (20) est configuré de manière à commuter du deuxième mode de marche à vide (LL2) vers le premier mode de marche à vide (LL1) si, pendant le deuxième mode de marche à vide (LL2), l'état de charge ou la tension (Uc) d'au moins l'un des accumulateurs d'énergie dudit au moins un circuit modulaire en série (TS) atteint ou devient inférieur à un état de charge minimal prédéfini ou à une tension minimale de module prédéfinie.

2. Onduleur (10) selon l'une quelconque des revendications précédentes, **caractérisé en ce que**
le dispositif de commande (20) est configuré de manière à commuter du deuxième mode de marche à vide (LL2) vers le premier mode de marche à vide (LL1) si, pendant le deuxième mode de marche à vide (LL2), la tension (Um) au niveau dudit au moins un circuit modulaire en série (TS) atteint ou devient inférieure à une tension minimale prédéfinie (Umin).

3. Onduleur (10) selon l'une quelconque des revendications précédentes, **caractérisé en ce que**
le dispositif de commande (20) est configuré de manière à commuter du premier mode de marche à vide (LL1) vers le deuxième mode de marche à vide (LL2) dès que les tensions (Uc) au niveau des accumulateurs d'énergie sont suffisamment élevées pour que, après une commutation vers le deuxième mode de marche à vide (LL2), la tension (Um) présente au niveau dudit au moins un circuit modulaire en série (TS) atteigne ou dépasse une tension de consigne prédéfinie (Usoll) qui est supérieure à la tension minimale (Umin).

4. Onduleur (10) selon l'une quelconque des revendications précédentes, **caractérisé en ce que**
- dans le premier mode de marche à vide (LL1), au moins un élément de commutation (S) d'au moins l'un des sous-modules (SM) est activé, et l'accumulateur d'énergie du sous-module (SM) associé est inséré ou court-circuité par l'intervention dudit au moins un élément de commutation (S) activé, et les tensions électriques des sous-modules (SM) insérés ou court-circuités déterminent la tension de branche modulaire en série (Um) présente au niveau dudit au moins un circuit modulaire en série (TS) et assurent la marche à vide, et
- dans le deuxième mode de marche à vide (LL2), en raison des éléments de commutation (S) désactivés, ledit au moins un circuit modulaire en série (TS) génère une tension de marche à vide qui est déterminée ou au moins codéterminée par la tension cumulée des accumulateurs d'énergie de tous les sous-modules (SM).

5. Onduleur (10) selon l'une quelconque des revendications précédentes,
**caractérisé en ce que**
dans le deuxième mode de marche à vide (LL2), ledit au moins un circuit modulaire en série (TS) est - en raison du niveau de la tension de circuit modulaire en série qui y est présente et de l'effet de blocage de diodes au sein de ses sous-modules (SM) - isolant en termes de flux de courant entre le premier côté de raccordement (AS1) et le deuxième côté de raccordement (AS2).

6. Onduleur (10) selon la revendication 5,
**caractérisé en ce que**
le premier côté de raccordement (AS1) est un côté tension alternative qui comprend au moins un raccordement de tension alternative (L1, L2, L3), au niveau duquel un courant alternatif peut être injecté ou prélevé.

7. Onduleur (10) selon l'une quelconque des revendications précédentes,
**caractérisé en ce que**
le deuxième côté de raccordement (AS2) est un côté tension continue qui comprend deux raccordements de tension continue (L+, L-), au niveau desquels un courant continu (Idc) peut être injecté ou prélevé.

8. Onduleur (10) selon l'une quelconque des revendications précédentes,
**caractérisé en ce que**
- ledit au moins un circuit modulaire en série (TS) est monté entre l'un des deux raccordements de tension continue et le ou l'un des raccordements de tension alternative, et
- le dispositif de commande (20) - en cas de marche à vide souhaitée - établit, pour ledit au moins un circuit modulaire en série (TS), le premier mode de marche à vide (LL1) si la tension cumulée issue des tensions des sous-modules (SM) dudit au moins un circuit modulaire en série (TS) atteint ou devient inférieure à une tension minimale prédéfinie (Umin).

9. Onduleur (10) selon la revendication 8,
**caractérisé en ce que**
le dispositif de commande (20) est configuré de telle sorte qu'il calcule la tension minimale prédéfinie (Umin) en tenant compte de l'état de fonctionnement respectif de l'onduleur (10).

10. Onduleur (10) selon l'une quelconque des revendications précédentes,
**caractérisé en ce que**
la tension minimale (Umin) correspond à une somme de tensions ou dépend au moins d'une somme de tensions qui est déterminée par sommation, à savoir
- de la moitié de la valeur absolue de la tension continue (Udc) qui est présente ou au moins doit être présente entre les deux raccordements de tension continue (L+, L-), et
- de la valeur absolue de l'amplitude de tension de la tension alternative (Uac) présente au niveau du raccordement de tension alternative.

11. Onduleur (10) selon l'une quelconque des revendications précédentes,
**caractérisé en ce que**
au moins un montage en série comprenant deux circuits modulaires en série (TS) est monté entre les deux raccordements de tension continue, un point milieu dudit montage formant le ou l'un des raccordements de tension alternative.

12. Onduleur (10) selon l'une quelconque des revendications précédentes, **caractérisé en ce que**
- l'onduleur (10) comprend au moins deux montages en série (R1, R2, R3) connectés en parallèle, chacun comprenant deux circuits modulaires en série (TS) et dont les bornes extérieures forment chacune l'un des raccordements de tension continue de l'onduleur (10), et
- chacun des points milieux entre deux circuits modulaires en série (TS) montés en série forme un raccordement de tension alternative de l'onduleur (10).

13. Procédé de fonctionnement d'un onduleur (10), lequel est doté d'un premier côté de raccordement (AS1) et d'un deuxième côté de raccordement (AS2),
- dans lequel l'onduleur (10) comporte au moins un circuit modulaire en série (TS) doté de deux sous-modules (SM) montés électriquement en série et un dispositif de commande (20) pour la commande des sous-modules (SM),
- dans lequel les sous-modules (SM) comprennent chacun un accumulateur d'énergie et au moins deux éléments de commutation (S), dont au moins un élément de commutation (S) est activé pendant le fonctionnement actif du sous-module (SM), et
- dans lequel le dispositif de commande (20) établit, par commande des éléments de commutation (S), un flux d'énergie prédéfini entre les deux côtés de raccordement (AS1, AS2) ou provoque, par commande des éléments de commutation (S), une marche à vide dans laquelle il n'y a pas de flux d'énergie entre les deux côtés de raccordement (AS1, AS2),
dans lequel
- le dispositif de commande (20) permet au moins deux modes de marche à vide (LL1, LL2), à savoir
- un premier mode de marche à vide (LL1), dans lequel au moins l'un des sous-modules (SM) se trouve en fonctionnement actif, et
- un deuxième mode de marche à vide (LL2), dans lequel tous les sous-modules (SM) sont inactifs, et
- le dispositif de commande (20) établit, en cas de marche à vide souhaitée, le deuxième mode de marche à vide (LL2) tant que l'état de charge de l'unité, ou d'un groupe prédéfini d'unités, de stockage d'énergie de l'onduleur (10) remplit une condition de charge prédéfinie, et établit sinon le premier mode de marche à vide (LL1), **caractérisé en ce que**
le dispositif de commande (20) commute du deuxième mode de marche à vide (LL2) vers le premier mode de marche à vide (LL1) si, pendant le deuxième mode de marche à vide (LL2), l'état de charge ou la tension (Uc) d'au moins l'un des accumulateurs d'énergie dudit au moins un circuit modulaire en série (TS) atteint ou franchit par valeur inférieure un état de charge minimal prédéfini ou une tension minimale de module prédéfinie.

14. Procédé selon la revendication 13,
**caractérisé en ce que**
- pendant le premier mode de marche à vide (LL1), en cours de fonctionnement, tous les sous-modules (SM) sont exploités en fonctionnement actif, en particulier avec respectivement au moins un élément de commutation (S) activé, et/ou
- dans le premier mode de marche à vide (LL1), les sous-modules (SM) sont commandés de telle sorte que des courants de charge circulent à travers les sous-modules (SM) et que les accumulateurs d'énergie des sous-modules (SM) soient chargés, et/ou
- une mise à l'arrêt des sous-modules (SM) aux fins de la commutation du premier mode de marche à vide (LL1) vers le deuxième mode de marche à vide (LL2) est effectuée de manière échelonnée dans le temps, et/ou
- une mise à l'arrêt des sous-modules (SM) aux fins de la commutation du premier mode de marche à vide (LL1) vers le deuxième mode de marche à vide (LL2) n'intervient de préférence qu'après que le courant (I) à travers ledit au moins un circuit modulaire en série (TS) a été réglé à zéro ou au moins approximativement à zéro, c'est-à-dire en particulier après que lesdits courants de charge pour la charge des accumulateurs d'énergie des sous-modules (SM) ont été interrompus, et/ou
- une activation des sous-modules (SM) aux fins de la commutation du deuxième mode de marche à vide (LL2) vers le premier mode de marche à vide (LL1) s'effectue de manière échelonnée dans le temps.
